# EUROPÄISCHE PATENTSCHRIFT

(11) **EP 1 267 474 B1**
(45) Veröffentlichungstag und Bekanntmachung des Hinweises auf die Patenterteilung: **17.12.2008**
(21) Anmeldenummer: 02012887.2
(22) Anmeldetag: 11.06.2002
(51) Int. Cl.: H02K 7/18, B60C 23/04

(54) **Vorrichtung zum Erzeugen elektrischer Energie aus der Drehbewegung einer Welle**
Device for producing electric energy from the rotary motion of a shaft
Dispositif de production d'énergie électrique à partir de la rotation d'un arbre

(30) Priorität: 11.06.2001 DE 10128208
(43) Veröffentlichungstag der Anmeldung: 18.12.2002
(73) Patentinhaber: Prüftechnik Dieter Busch AG, 85737 Ismaning (DE)
(72) Erfinder: Schühle, Roland, 88213 Ravensburg (DE)

(56) Entgegenhaltungen:
- EP-A- 0 520 271
- DE-A1- 4 444 757
- DE-A1- 10 002 092
- DE-C- 451 236
- DE-C1- 19 549 235
- FR-A- 2 763 759
- GB-A- 2 341 646
- US-A- 4 147 945
- US-A- 4 300 120
- US-A- 4 309 621
- US-A- 4 782 431
- US-A- 5 760 515
- US-A- 5 781 104

## Beschreibung

Die vorliegende Erfindung betrifft eine Vorrichtung mit einer Rotationsgeneratoranordnung zum Erzeugen elektrischer Energie aus der Drehbewegung einer Welle, wobei die Rotationsgeneratoranordnung ohne Kontakt mit räumlich feststehenden Teilen ausgebildet ist und wirkt.

Eine solche Vorrichtung ist aus der US 4 075 603 bekannt, bei welcher die Generatoranordnung mittels einer Montageplatte fest an der Stirnfläche eines Fahrzeugrads angebracht wird. Der Generator umfasst eine Statorspule mit zwei radial nach außen geführten Anschlüssen, welche in zwei Statorbechern aufgenommen ist, wobei einer der beiden Statorbecher mit einer festen Achse versehen ist, die koaxial zur Drehachse des Fahrzeugrads steht. Auf dieser Achse ist mittels eines Drehlagers ein den Rotor des Generators bildender Permanentmagnet drehbar bezüglich des Stators gelagert. Der Permanentmagnet und die Statorbecher sind so ausgebildet, dass der Generator einen Klauenpol-Generator bildet. An dem Permanentmagneten ist ein sich in radialer Richtung erstreckendes Pendelbauteil fest angebracht. Bei sich drehendem Fahrzeugrad dreht sich somit die Statorspule mit der gleichen Drehzahl wie das Rad, während der Rotor, d.h. der Permanentmagnet, aufgrund der Schwerkraftwirkung auf das Pendelbauteil bezüglich der Statorbewegung festgehalten wird, so dass sich eine relative Drehung zwischen dem Stator und dem Rotor ergibt, wodurch in der Statorspule eine Spannung induziert wird, welche zur Stromversorgung eines HF-Senders dient, der feststehend bezüglich des Stators angeordnet ist. Der Sender dient zum Übermitteln von Meßsignalen eines an dem Rad vorgesehenen Reifendrucksensors.

In der US 4,782,431 wird weiter ein mit der Welle rotierender Generator zur Erzeugung elektrischer Energie zur Beleuchtung des Rades eines Fahrzeugs beschrieben, der als konventioneller Generator über eine Welle an einem rotierenden Rad eines Fahrzeugs angebracht wird und in dem ein einzelnes schweres Gewicht 2 bzw. 2' statische Teile 3, 3' in einer festen Position hält, während der Rotor im Betrieb des Fahrzeugs mit dessen Rad angetrieben wird. Die US 4,300,120 beinhaltet einen ebenfalls an einem Fahrzeugrad befestigten Generator zur Erzeugung elektrischer Energie, wobei ein als zweites Teil bzw. halbmondförmiges Gewicht 58 beschriebenes Element durch Ausnutzung der Schwerkraft ein Joch 52 in einer festen Position hält.

Es ist Aufgabe der vorliegenden Erfindung, eine Vorrichtung zu schaffen zum Erzeugen und Bereitstellen elektrischer Energie kleiner Leistung an einer sich drehenden Welle, wobei dies ohne Batterie oder elektromagnetische oder optische Einkopplung usw. erfolgen soll und wobei ferner keinerlei räumlich feststehende Teile erforderlich sein sollen, so dass die Vorrichtung insbesondere nicht am Wellenende befestigt sein muss.

Diese Aufgabe wird erfindungsgemäß gelöst durch eine Vorrichtung gemäß Anspruch 1 Bei dieser erfindungsgemäßen Lösung ist vorteilhaft, dass ohne räumlich feststehende Teile und ohne Verwendung einer Batterie oder elektromagnetischer oder optischer Einkoppelung elektrische Energie direkt an einer sich drehenden Welle bereitgestellt werden kann, wobei dies vorzugsweise direkt an der Wellenoberfläche der Fall ist.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigt:

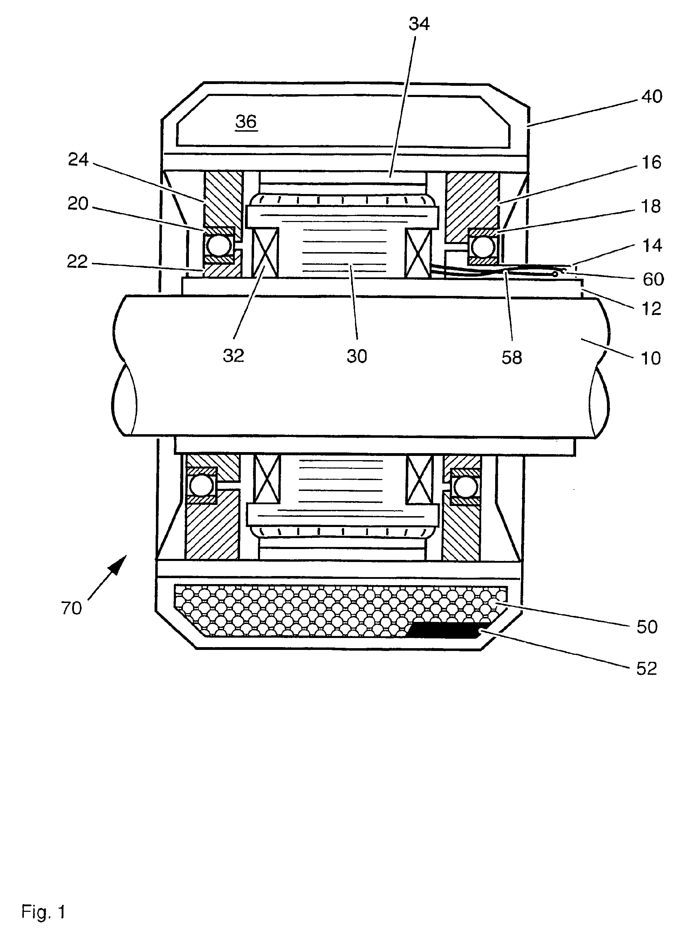

Fig.1 einen Längsschnitt einer erfindungsgemäßen Rotationsgeneratoranordnung gemäß einer ersten Ausführungsform.

In Fig. 1 ist eine erste Ausführungsform eines insgesamt mit 70 bezeichneten Rotationsgenerators gezeigt, welcher auf einer Welle 10 montiert ist und zur Erzeugung elektrischer Leistung kleiner Energie aus der Drehbewegung der Welle 10 und zur Bereitstellung dieser Leistung an der Welle 10 vorgesehen ist. Der Generator 70 umfasst eine Statoranordnung, welche im wesentlichen von der Welle 10 durchzogen ist und drehfest auf dieser montiert ist, sowie eine Rotoranordnung, welche bezüglich der Statoranordnung drehbar gelagert ist und diese koaxial zur Welle 10 umgibt. Die Statoranordnung umfasst eine Spannhülse 12, eine Statorinduktionsspule 32, ein Statorelement (Anker) 30 aus weichmagnetischem Material sowie Lageraufnahmen 14 und 22 zur Aufnahme jeweils eines Kugellagers 20 bzw. 18. Die Spannhülse 12 dient zur drehfesten Montage des Statorelements 30, der Spule 32 und der Lageraufnahmen 14 und 22 auf der Welle 10. Die Spule 32, das Statorelement 30 sowie die Lageraufnahmen 14, 22 sind im wesentlichen rotationssymmetrisch um die Welle 10 ausgebildet. Die Spule 32 ist mit elektrischen Zuleitungen 58 versehen, welche zu einem elektrischen Verbindungselement 60 geführt sind, welches nahe der Umfangsfläche der Welle 10 angeordnet ist und bei welchem es sich beispielsweise um eine Lüsterklemme handeln kann. Die Achse der Spule 32 und des Statorelements 30 verläuft senkrecht zu der Achse der Welle 10. Es versteht sich, dass auch mehrere Spulen und zugehörige Statorelement in Umfangsrichtung verteilt vorgesehen sein können.

Die Rotoranordnung umfasst ein Gehäuse 40, welches mittels Lageraufnahmen 16, 24 über die Kugellager 18 bzw. 20 drehbar bezüglich der Rotoranordnung und damit der Welle 10 gelagert ist, sowie einen hohlzylinderförmigen, einstückigen Permanentmagneten 34, welcher an seiner Außenumfangsfläche fest an dem Rotorgehäuse 40 angebracht ist und das Statorelement 30 bzw. die Statorspule 32 der Statoranordnung koaxial zu der Welle 10 umgibt. Der Permanentmagnet 34 ist als multipolförmig magnetisiert, wobei ein Teil der Pole radial außen und der andere Teil radial innen liegt.

Das Rotorgehäuse 40 ist ebenfalls im wesentlichen rotationssymmetrisch ausgebildet und weist eine Hohlkammer 36 auf, welche die Welle 10 ringförmig umgibt und zum Teil mit Kugeln 50 aus einem schweren Material, wie beispielsweise Blei oder Uran, gefüllt ist. Die Hohlkammer 36 ist so ausgestaltet, dass sich die Kugeln 50 in Umfangsrichtung darin nicht frei bewegen können, wobei zu diesem Zweck schematisch bei 52 angedeutete Mitnehmer vorgesehen sein können. Ein typischer Füllgrad für die Kammer 36 liegt bei 50 %. Die Welle 10 ist im wesentlichen horizontal orientiert, so dass sich die Kugeln 50 gemäß Fig. 1 im wesentlichen im unteren Teil der Hohlkammer 36 ansammeln und auf diese Weise eine Unwucht erzeugen, wobei die Mitnehmer 52 dafür sorgen. dass die Kugeln 50 diesen unteren Teil der Hohlkammer 36 nicht verlassen können. Die so gebildete Unwucht bewirkt, dass das Rotorgehäuse 40 insgesamt als Ringpendel wirkt und auf diese Weise der Drehung des Rotorgehäuses 40 und damit der Rotoranordnung insgesamt einen Widerstand entgegensetzt bzw. diese verzögert. Somit kann die mit den Kugeln 50 gefüllte Hohlkammer 36 als Verzögerungsanordnung betrachtet werden.

Wenn sich nun die Welle 10 dreht, dreht sich die Statoranordnung und insbesondere die Spule 32 und das Statorelement 30 entsprechend mit. Aufgrund der induktiven Kopplung zwischen der Statoranordnung und der Rotoranordnung über die Spule 32 bzw. das Statorelement 30 und den Permanentmagneten 34 und der Reibung in den Kugellagern 18 und 20 würde sich der Permanentmagnet 34 und damit das Rotorgehäuse 40, abgesehen von Reibungsverlusten an der der Luft zugewandten Außenseite, entsprechend mitdrehen, was eine nennenswerte induktive Erzeugung von elektrischer Leistung in der Spule 32 verhindern würde. Da jedoch die Verzögerungsanordnung mittels der Ringpendelwirkung der Hohlkammer 36 mit den Kugeln 50 für eine relative Verzögerung der Rotoranordnung, und damit insbesondere des Rotorgehäuses 40 und des Permanentmagneten 34, sorgt, findet eine relative Drehung zwischen dem Rotorgehäuse 40, und damit dem Permanentmagneten 34, und der Spule 32 bzw. dem Statorelement 30 statt, so dass elektrische Energie zumindest mit kleiner Leistung an dem Verbindungselement 60 und damit an der Welle 10 bereitgestellt werden kann.

Die Ausführungsform gemäß Fig.1 ist vor allem für langsam laufende Wellen 10 geeignet, da die Pendelfrequenz des Ringpendels unter 1 Hz liegen sollte (die Pendelfrequenz kann durch den Füllungsgrad mit den Kugeln 50 beeinflusst werden).

Zur leichteren Montage können die rotationssymmetrisch ausgebildeten Teile der Ausführungsform gemäß Fig. 1 mindestens zum Teil mehrstückig ausgebildet sein, wobei eine zumindest zweistückige Ausbildung in Umfangsrichtung zweckmäßig ist.

Bei der Ausführungsform gemäß Fig. 1 ist der Rotationsgenerator 70 koaxial zu der Welle 10 ausgebildet.

## Patentansprüche

1. Vorrichtung zum Erzeugen elektrischer Energie aus der Drehbewegung einer Welle (10), mit einer Rotations-Generatoranordnung (70) mit einer Statoranordnung (14, 22, 30,32) und einer Rotoranordnung (16, 24, 34, 40, 41), wobei die Statoranordnung auf der Welle drehfest montiert ist, die Rotoranordnung koaxial zu der Welle angeordnet ist und die Statoranordnung umgibt und über ein Drehlager (18, 20) drehbar bezüglich der Statoranordnung gelagert ist, die Statoranordnung mit mindestens einer Induktionsspule (32) versehen ist und die Rotoranordnung mit einer Einrichtung (34) aus permanentmagnetischem oder weichmagnetischem Material, die hohlzylindrisch ausgebildet ist und die Spule zwecks induktiver Wechselwirkung mit derselben umgibt, sowie mit einer ohne Kontakt zu räumlich feststehenden Teilen wirkenden Verzögerungsanordnung (36, 40, 50, 52; 41) versehen ist, welche die Drehung der Rotoranordnung um die Wellenachse verzögert,
wobei die Verzögerungsanordnung (36, 40, 50, 52; 41) an der radial außen liegenden Seite der Rotoranordnung (16, 24, 34, 40, 41) angeordnet ist, und
wobei die Verzögerungsanordnung (36, 40, 50, 52) als radial zur Wellenachse verlaufendes Pendel ausgebildet ist,
**dadurch gekennzeichnet,**
**dass** das Pendel als Ringpendel (36, 40, 50, 52) ausgebildet ist,
welches die Statoranordnung (14, 22, 30,32) ringförmig umgibt und
welches von einer ringförmigen Hohlkammer (36) gebildet wird, welche zum Teil mit Kugeln (50) gefüllt ist, deren Bewegung in der Hohlkammer in Umfangsrichtung durch Mitnehmerelemente (52) beschränkt ist.

2. Vorrichtung nach Anspruch 1, **dadurch gekennzeichnet,**
**dass** die Einrichtung (34) aus permanentmagnetischem oder weichmagnetischem Material eine permanentmagnetische Multipolanordnung aufweist, wobei ein Teil der Pole radial außen und der andere Teil der Pole radial innen liegt.

3. Vorrichtung nach einem der vorhergehenden Ansprüche, **dadurch gekennzeichnet, dass** die Rotoranordnung und die Statoranordnung jeweils mindestens zweiteilig ausgebildet sind, um die Montage auf der Welle (10) zu erleichtern.

4. Vorrichtung nach einem der vorhergehenden Ansprüche, **dadurch gekennzeichnet, dass** ein Sensorelement (124) an der Welle (100) montiert ist, welches von der Generatoranordnung (170) mit Strom versorgt wird.

5. Vorrichtung nach Anspruch 5, **dadurch gekennzeichnet,**
**dass** das Sensorelement (124) mit einem an der Welle (100) montierten HF-Sender zusammenwirkt, der von der Rotations-Generatoranordnung (170) mit Strom versorgt wird.

6. Vorrichtung nach Anspruch 5 oder 6, **dadurch gekennzeichnet,**
**dass** das Sensorelement und der HF-Sender von einem Energiespeicher (124) mit Strom versorgt werden, der von der Generatoranordnung (170) mit Strom versorgt wird.

7. Vorrichtung nach einem der vorhergehenden Ansprüche, **dadurch gekennzeichnet, dass** die Spulenachse in radialer Richtung bzgl. der Welle (10) orientiert ist.

## Claims

1. Apparatus for generating electrical energy from the rotary motion of a shaft (10), with a rotation generator arrangement (70) with a stator arrangement (14, 22, 30, 32) and a rotor arrangement (16, 24, 34, 40, 41), the stator arrangement being fitted in a manner fixed against rotation on the shaft, the rotor arrangement being arranged coaxially with respect to the shaft and surrounding the stator arrangement and being mounted such that it is capable of rotating, via a pivot bearing (18, 20), with respect to the stator arrangement, the stator arrangement being provided with at least one induction coil (32), and the rotor arrangement being provided with a device (34), which is made from a permanently magnetic or soft-magnetic material, is hollow-cylindrical and surrounds the coil for the purpose of interacting therewith inductively, and with a delay arrangement (36, 40, 50, 52; 41), which acts without any contact with spatially fixed parts and delays the rotation of the rotor arrangement about the shaft axis, the delay arrangement (36, 40, 50, 52; 41) being arranged on the radially outer side of the rotor arrangement (16, 24, 34, 40, 41), and the delay arrangement (36, 40, 50, 52) being in the form of a pendulum running radially with respect to the shaft axis, **characterized in that** the pendulum is in the form of an annular pendulum (36, 40, 50, 52), which surrounds the stator arrangement (14, 22, 30, 32) in annular fashion and which is formed by an annular hollow chamber (36), which is partially filled with balls (50), whose movement in the hollow chamber in the circumferential direction is restricted by driver elements (52).

2. Apparatus according to Claim 1, **characterized in that** the device (34) made from permanently magnetic or soft-magnetic material has a permanently magnetic multipole arrangement, with some of the poles being positioned radially on the outside and the others being positioned radially on the inside.

3. Apparatus according to one of the preceding claims, **characterized in that** the rotor arrangement and the stator arrangement are each formed in at least two parts in order to facilitate fitting on the shaft (10).

4. Apparatus according to one of the preceding claims, **characterized in that** a sensor element (124) is fitted on the shaft (100) and is supplied with current by the generator arrangement (170).

5. Apparatus according to Claim 4, **characterized in that** the sensor element (124) interacts with an RF transmitter, which is fitted on the shaft (100) and is supplied with current by the rotation generator arrangement (170).

6. Apparatus according to Claim 4 or 5, **characterized in that** the sensor element and the RF transmitter are supplied with current by an energy store (124), which is supplied with current by the generator arrangement (170).

7. Apparatus according to one of the preceding claims, **characterized in that** the coil axis is oriented in the radial direction with respect to the shaft (10).

## Revendications

1. Dispositif pour générer de l'énergie électrique à partir du mouvement rotatif d'un arbre (10), comprenant un arrangement générateur en rotation (70) muni d'un arrangement de stator (14, 22, 30, 32) et d'un arrangement de rotor (16, 24, 34, 40, 41), l'arrangement de stator étant monté en rotation solidaire sur l'arbre, l'arrangement de rotor étant disposé de manière coaxiale par rapport à l'arbre et entourant l'arrangement de stator et étant supporté par le biais d'un palier de rotation (18, 20) de manière à pouvoir tourner par rapport à l'arrangement de stator, l'arrangement de stator étant muni d'au moins une bobine d'induction (32) et l'arrangement de rotor d'un dispositif (34) en matériau à magnétisme permanent ou à magnétisme doux qui est de forme cylindrique creuse et entoure la bobine en vue d'une interaction inductive avec celle-ci, ainsi que d'un arrangement de ralentissement (36, 40, 50, 52 ; 41) agissant sans contact avec les parties fixes dans l'espace, lequel ralentit la rotation de l'arrangement de rotor autour de l'axe de l'arbre, l'arrangement de ralentissement (36, 40, 50, 52 ; 41) étant disposé sur le côté de l'arrangement de rotor (16, 24, 34, 40, 41) qui se trouve à l'extérieur dans le sens radial et l'arrangement de ralentissement (36, 40, 50, 52) étant réalisé sous la forme d'un pendule qui s'étend dans le sens radial par rapport à l'axe de l'arbre, **caractérisé en ce que** le pendule est réalisé sous la forme d'un pendule annulaire (36, 40, 50, 52) qui entoure l'arrangement de stator (14, 22, 30, 32) en forme d'anneau et qui est formé par une chambre creuse (36) de forme annulaire qui est en partie remplie de billes (50) dont le mouvement dans la chambre creuse est limité dans le sens du pourtour par des éléments d'entraînement (52).

2. Dispositif selon la revendication 1, **caractérisé en ce que** le dispositif (34) en matériau à magnétisme permanent ou à magnétisme doux présente un arrangement multipolaire à magnétisme permanent, une partie des pôles se trouvant à l'extérieur dans le sens radial et l'autre partie des pôles à l'intérieur dans le sens radial.

3. Dispositif selon l'une des revendications précédentes, **caractérisé en ce que** l'arrangement de rotor et l'arrangement de stator sont respectivement constitués d'au moins deux parties afin de faciliter le montage sur l'arbre (10).

4. Dispositif selon l'une des revendications précédentes, **caractérisé en ce qu'**un élément de détection (124) est monté sur l'arbre (100), lequel est alimenté en électricité par l'arrangement générateur (170).

5. Dispositif selon la revendication 4, **caractérisé en ce que** l'élément de détection (124) interagit avec un émetteur HF monté sur l'arbre (100), lequel est alimenté en électricité par l'arrangement générateur en rotation (170).

6. Dispositif selon la revendication 4 ou 5, **caractérisé en ce que** l'élément de détection et l'émetteur HF sont alimentés en électricité par un accumulateur d'énergie (124) qui est alimenté en électricité par l'arrangement générateur (170).

7. Dispositif selon l'une des revendications précédentes, **caractérisé en ce que** l'axe de la bobine est orienté dans le sens radial par rapport à l'arbre (10).
